# EUROPEAN PATENT APPLICATION

(11) **EP 1 389 563 A2**
(43) Date of publication of application: **18.02.2004**
(21) Application number: 03017707.5
(22) Date of filing: 02.08.2003
(51) Int. Cl.: B60Q 1/30

(54) **Illuminant for turbulent flow plate**

(30) Priority: 16.08.2002 US 223902
(71) Applicant: Liu, Yao-Huang, Yungkang, Tainan (TW)
(72) Inventor: Liu, Yao-Huang, Yungkang, Tainan (TW)
(74) Representative: Panten, Kirsten

(57) **Abstract**

An illuminant turbulent flow plate includes a main panel (1), two waterproof washers (11), two circuit boards (12), and two side covers (13). Thus, the light emitting device is mounted on the two sides of the main panel, thereby enhancing the versatility of the illuminant turbulent flow plate. In addition, when the rear lamp or braking lamp lights, the light emitting diodes (121) blink so as to achieve a decorative effect, thereby enhancing the aesthetic quality of the vehicle.

## Description

The present invention relates to an illuminant turbulent flow plate, and more particularly to an illuminant turbulent flow plate that lights and blinks when the brake lamp of the car is operated.

A conventional illuminant is usually mounted on the middle portion of a turbulent flow plate. However, the conventional illuminant cannot be mounted on different positions of the turbulent flow plate.

The primary objective of the present invention is to provide an illuminant turbulent flow plate that lights and blinks when the brake lamp of the car is operated.

Another objective of the present invention is to provide an illuminant turbulent flow plate, wherein when the rear lamp or braking lamp lights, the light emitting diodes blink so as to achieve a decorative effect, thereby enhancing the aesthetic quality of the vehicle.

A further objective of the present invention is to provide an illuminant turbulent flow plate, wherein the light emitting diodes blink when the braking lamp lights, so as to achieve a warning effect, thereby protecting the driver's safety.

A further objective of the present invention is to provide an illuminant turbulent flow plate, wherein the light emitting device is mounted on the two sides of the main panel, thereby enhancing the versatility of the illuminant turbulent flow plate.

In accordance with the present invention, there is provided an illuminant turbulent flow plate, comprising a main panel, two circuit boards, and two side covers, wherein:
the main panel has two sides each provided with a peripheral flange protruded outward therefrom;
the peripheral flange of the main panel has a side formed with a recess;
each of the two circuit boards is mounted in the recess of the respective peripheral flange of the main panel, and has a periphery provided with a plurality of light emitting diodes; and
each of the two side covers is mounted on the respective peripheral flange of the main panel to encompass the respective circuit board.

Further benefits and advantages of the present invention will become apparent after a careful reading of the detailed description with appropriate reference to the accompanying drawings.

In the drawings:
Fig. 1 is a perspective view of an illuminant turbulent flow plate in accordance with the preferred embodiment of the present invention;
Fig. 2 is a partially cut-away exploded perspective view of the illuminant turbulent flow plate in accordance with the preferred embodiment of the present invention; and
Fig. 3 is a schematic perspective view showing the usage state of the illuminant turbulent flow plate in accordance with the preferred embodiment of the present invention.

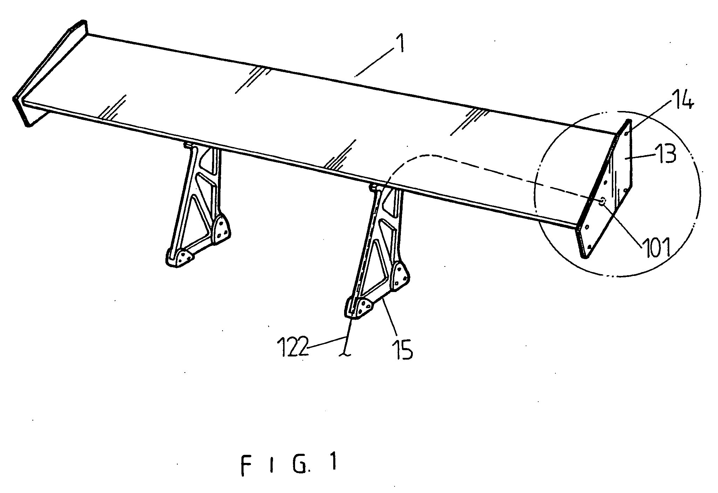

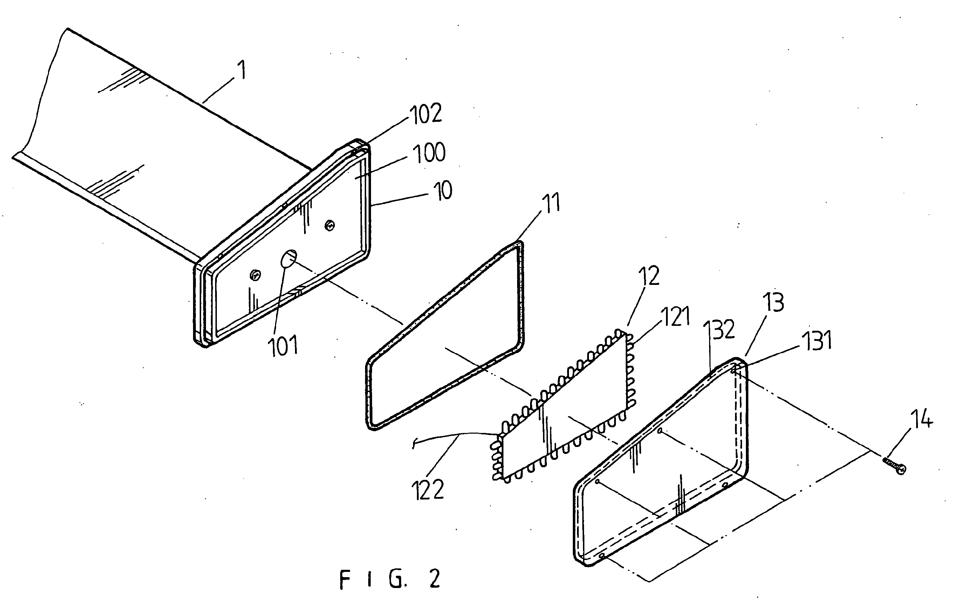

Referring to the drawings and initially to Figs. 1 and 2, an illuminant turbulent flow plate in accordance with the preferred embodiment of the present invention comprises a main panel 1, two circuit boards 12, and two side covers 13.

The main panel 1 has two sides each provided with a peripheral flange 10 protruded outward therefrom. The peripheral flange 10 of the main panel 1 has a side formed with a recess 100 and a through hole 101 communicated with the recess 100 and extended into an inside of the main panel 1. The peripheral flange 10 of the main panel 1 has a periphery formed with a plurality of screw bores 102.

Each of the two circuit boards 12 is mounted in the recess 100 of the respective peripheral flange 10 of the main panel 1, and has a periphery provided with a plurality of light emitting diodes (LED) 121. Each of the two circuit boards 12 is provided with a wire 122 having a first side connected to the light emitting diodes 121 and a second side extended through the through hole 101 of the respective peripheral flange 10 of the main panel 1 into the inside of the main panel 1. Preferably, the second side of the wire 122 of each of the two circuit boards 12 is extended to a stand 15 of the main panel 1.

Each of the two side covers 13 is mounted on the respective peripheral flange 10 of the main panel 1 to encompass the respective circuit board 12 and has a side formed with a peripheral groove 132 to receive the respective peripheral flange 10 of the main panel 1. Each of the two side covers 13 has a periphery formed with a plurality of screw bores 131 each aligning with a respective one of the screw bores 102 of the respective peripheral flange 10 of the main panel 1.

The illuminant turbulent flow plate further comprises a plurality of locking screws 14 each extended through a respective one of the screw bores 131 of the respective side cover 13 and each screwed into a respective one of the screw bores 102 of the respective peripheral flange 10 of the main panel 1, so that each of the two side covers 13 is fixed on the respective peripheral flange 10 of the main panel 1.

The illuminant turbulent flow plate further comprises two waterproof washers 11 each mounted between the respective peripheral flange 10 of the main panel 1 and the respective side cover 13 to provide a waterproof effect. Preferably, each of the two waterproof washers 11 is mounted on the periphery of the respective peripheral flange 10 of the main panel 1 and is received in the peripheral groove 132 of the respective side cover 13.

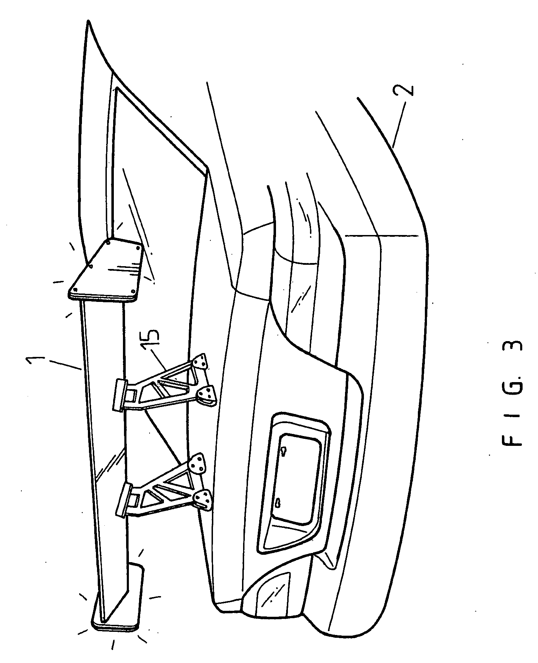

Referring to Fig. 3 with reference to Figs. 1 and 2, when the main panel 1 is mounted on a vehicle 2, such as the automobile, the second side of the wire 122 of each of the two circuit boards 12 is extended outward from the stand 15 of the main panel 1 and is extended into the inside of the vehicle 2 to connect the electric line system in the inside of the vehicle 2.

Thus, when the rear lamp or braking lamp lights, the light emitting diodes 121 of each of the two circuit boards 12 blink to achieve a decorative effect, thereby enhancing the aesthetic quality of the vehicle 2. In addition, the light emitting diodes 121 of each of the two circuit boards 12 blink when the braking lamp lights, so as to achieve a warning effect, thereby protecting the driver's safety. Further, the light emitting device is mounted on the two sides of the main panel, thereby enhancing the versatility of the illuminant turbulent flow plate.

## Claims

1. An illuminant turbulent flow plate, comprising a main panel (1), two circuit boards (12), and two side covers (13), wherein:
the main panel (1) has two sides each provided with a peripheral flange (10) protruded outward therefrom;
the peripheral flange (10) of the main panel (1) has a side formed with a recess (100);
each of the two circuit boards (12) is mounted in the recess (100) of the respective peripheral flange (10) of the main panel (1), and has a periphery provided with a plurality of light emitting diodes (121); and
each of the two side covers (13) is mounted on the respective peripheral flange (10) of the main panel (1) to encompass the respective circuit board (12).

2. The illuminant turbulent flow plate in accordance with claim 1, wherein the peripheral flange (10) of the main panel (1) has a side formed with a through hole (101) communicated with the recess (100) and extended into an inside of the main panel (1).

3. The illuminant turbulent flow plate in accordance with claim 2, wherein each of the two circuit boards (12) is provided with a wire (122) having a first side connected to the light emitting diodes (121) and a second side extended through the through hole (101) of the respective peripheral flange (10) of the main panel (1) into the inside of the main panel (1).

4. The illuminant turbulent flow plate in accordance with claim 3, wherein the second side of the wire (122) of each of the two circuit boards (12) is extended to a stand (15) of the main panel (1).

5. The illuminant turbulent flow plate in accordance with claim 1, wherein each of the two side covers (13) has a side formed with a peripheral groove (132) to receive the respective peripheral flange (10) of the main panel (1).

6. The illuminant turbulent flow plate in accordance with claim 5, further comprising two waterproof washers (11) each mounted between the respective peripheral flange (10) of the main panel (1) and the respective side cover (13) to provide a waterproof effect.

7. The illuminant turbulent flow plate in accordance with claim 6, wherein each of the two waterproof washers (11) is mounted on the periphery of the respective peripheral flange (10) of the main panel (1) and is received in the peripheral groove (132) of the respective side cover (13).

8. The illuminant turbulent flow plate in accordance with claim 1, wherein the peripheral flange (10) of the main panel (1) has a periphery formed with a plurality of screw bores, each of the two side covers (13) has a periphery formed with a plurality of screw bores (131) each aligning with a respective one of the screw bores of the respective peripheral flange (10) of the main panel (1) and the illuminant turbulent flow plate further comprises a plurality of locking screws (14) each extended through a respective one of the screw bores (131) of the respective side cover (13) and each screwed into a respective one of the screw bores of the respective peripheral flange (10) of the main panel (1) , so that each of the two side cover (13) is fixed on the respective peripheral flange (10) of the main panel (1).
